# EUROPÄISCHE PATENTANMELDUNG

(11) **EP 4 574 717 A1**
(43) Veröffentlichungstag der Anmeldung: **25.06.2025**
(21) Anmeldenummer: 24218734.2
(22) Anmeldetag: 10.12.2024
(51) Int. Cl.: B65G 27/04

(54) **FÖRDERTEPPICH UND VIBRATIONSFÖRDEREINRICHTUNG**

(30) Priorität: 20.12.2023 DE 102023136089
(71) Anmelder: ifc intelligent feeding components GmbH, 74229 Oedheim (DE)
(72) Erfinder: Schirmer, Andreas, 74229 Oedheim (DE)
(74) Vertreter: BRP Renaud & Partner mbB Rechtsanwälte Patentanwälte Steuerberater

(57) **Zusammenfassung**

Die Erfindung betrifft einen Förderteppich (4) für eine Vibrationsfördereinrichtung, wobei der Förderteppich (4) eine Grundplatte (5), die eine Längsrichtung (X), eine Querrichtung (Y) und eine Höhenrichtung (Z) definiert, und eine Vielzahl von Borsten (6) aufweist, die in der Höhenrichtung (Z) von der Grundplatte (5) abstehen.

Der Förderteppich (4) lässt sich einfacher für die jeweilige Vibrationsfördereinrichtung konfektionieren, wenn die Borsten (6) mittels 3D-Druck auf die Grundplatte (5) aufgedruckt sind.

## Beschreibung

Die vorliegende Erfindung betrifft einen Förderteppich für eine Vibrationsfördereinrichtung. Die Erfindung betrifft außerdem eine Vibrationsfördereinrichtung, die mit einem derartigen Förderteppich ausgestattet ist.

Eine Vibrationsfördereinrichtung zum Fördern von Stückgütern oder Werkstücken ist mit einer Förderstrecke, entlang der die Stückgüter bzw. Werkstücke transportiert werden, und mit einer Vibrationseinrichtung ausgestattet, welche die Förderstrecke zu Vibrationen bzw. Schwingungen anregt. Auf der Förderstrecke ist ein Förderteppich angeordnet, der so konfiguriert ist, dass auf dem Förderteppich aufliegende Stückgüter bzw. Werkstücke durch die Vibration entlang des Förderteppichs transportiert werden. Der Förderteppich besitzt Borsten, die üblicherweise von einer Grundplatte noch oben abstehen. Die Förderwirkung des Förderteppichs wird durch die Federelastizität der Borsten und durch eine gleichförmige Neigung aller Borsten gegenüber der Höhenrichtung erklärt. Die Vibrationen bzw. Schwingungen wirken bevorzugt in der Höhenrichtung, so dass die Borsten durch das Gewicht der Stückgüter bzw. Werkstücke in der Höhenrichtung federelastisch verformt werden. Die Neigung der Borsten definiert dabei die Förderrichtung.

Derartige Förderteppich sind kompliziert in der Herstellung und vergleichsweise teuer. Insbesondere sind Änderungen der Förderrichtung entlang der Förderstrecke vergleichsweise aufwendig in der Realisierung, da hierzu der Förderteppich, der eine vorbestimmte Förderrichtung aufweist, entsprechend zurechtgeschnitten werden muss und entlang der Förderstrecke aneinandergefügt werden muss, um die gewünschte Änderung der Förderrichtung herbeizuführen. Besonders schwierig ist die Realisierung bogenförmiger Abschnitte der Förderstrecke, insbesondere dann, wenn mehrere Abschnitte des Förderteppichs passgenau an einen vorgegebenen Bogen angepasst werden müssen.

Die vorliegende Erfindung beschäftigt sich mit dem Problem, für einen derartigen Förderteppich bzw. für eine zugehörige Vibrationsfördereinrichtung eine verbesserte oder zumindest eine andere Ausführungsform anzugeben, die sich insbesondere durch eine relativ einfache Herstellbarkeit auszeichnet. Außerdem ist eine einfache Anpassbarkeit an variierende Förderrichtungen entlang der Förderstrecke angestrebt.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung geht davon aus, dass ein Förderteppich eine Grundplatte aufweist, die eine Längsrichtung, eine Querrichtung und eine Höhenrichtung definiert, die senkrecht zueinander verlaufen, wobei von der Grundplatte eine Vielzahl von Borsten in der Höhenrichtung absteht. Die Erfindung beruht nun auf dem allgemeinen Gedanken, die Borsten mittels 3D-Druck auf die Grundplatte aufzudrucken. 3D-Druck wird häufig auch als additive Fertigung bezeichnet. Durch das Aufdrucken der Borsten mittels eines additiven Fertigungsverfahrens bzw. mittels 3D-Druck lassen sich Förderteppiche hinsichtlich der Förderrichtung einfach konfektionieren. Insbesondere lassen sich dadurch für die jeweilige Förderstrecke maßgeschneiderte Förderteppiche herstellen, sodass z.B. eine Förderstrecke mit variierender Förderrichtung realisiert werden kann, ohne dass hierzu ein aufwändiges Zurechtschneiden und Zusammenfügen separater Stücke des Förderteppichs erforderlich ist.

Gemäß einer vorteilhaften Ausführungsform kann auch die Grundplatte mittels 3D-Druck hergestellt sein. Damit lässt sich auch die Grundplatte wunschgemäß konfektionieren.

Die Grundplatte kann zweckmäßig eben und flach konfiguriert sein, sodass die Längsrichtung und die Querrichtung eine Grundplattenebene aufspannen, in der sich die Grundplatte erstreckt, während eine Plattendicke und die Höhenrichtung senkrecht zur Grundplattenebene verlaufen. Die Grundplatte kann alternativ auch jede beliebige dreidimensionale Form aufweisen. Sie kann daher auch gewölbt oder gekrümmt sein, wobei sie in einem quer zu ihrer Längserstreckung verlaufenden Querschnitt weiterhin flach konfiguriert ist. Die Längserstreckung bzw. Längsrichtung der Grundplatte ist dann entsprechend gekrümmt und/oder gewölbt.

Die Grundplatte kann insbesondere solide bzw. ohne Hohlräume ausgebildet sein. Die Borsten können insbesondere voneinander separat ausgebildet sein. Insbesondere können die Borsten miteinander nicht verbunden bzw. voneinander getrennt sein. An der Grundplatte können die Borsten voneinander beabstandet angeordnet sein.

Im vorliegenden Zusammenhang ist eine "Konfiguration" gleichbedeutend mit einer "Ausgestaltung" und/oder "Einrichtung", sodass die Formulierung "so konfiguriert, dass" gleichbedeutend ist mit der Formulierung "so ausgestaltet und/oder eingerichtet, dass".

Grundsätzlich ist denkbar, für die Grundplatte und für die Borsten dasselbe Material, vorzugsweise ein Kunststoff, zu verwenden. Bevorzugte Kunststoffe sind beispielsweise Polyamid (PA) und Polyurethan (PU), insbesondere PA12, thermoplastisches Polyamid (TPA), thermoplastisches Polyurethan (TPU) sowie Elastomere von TPA und TPU.

Entsprechend einer vorteilhaften Ausführungsform kann dagegen vorgesehen sein, dass die Grundplatte und die Borsten aus unterschiedlichen Materialien, vorzugsweise aus unterschiedlichen Kunststoffen, hergestellt sind. Hierdurch lassen sich für die Grundplatte und die Borsten jeweils besonders geeignete Materialien verwenden, um die jeweilige Funktionalität zu verbessern. Es ist klar, dass hierbei Materialen zum Einsatz kommen, die soweit ähnlich sind, dass sie sich mit ausreichender Festigkeit im 3D-Druck aneinander bzw. aufeinander drucken lassen.

Die Borsten weisen jeweils einen mit der Grundplatte verbundenen Fußbereich, ein von der Grundplatte entferntes Borstenende und einen Federbereich auf, der den Fußbereich mit dem Borstenende verbindet.

Zweckmäßig kann die jeweilige Borste quer zur Borstenlängsrichtung einen Borstenquerschnitt aufweisen, der im Fußbereich größer ist als im Federbereich. Hierdurch ergibt sich eine erhöhte Stabilität für die Anbindung der jeweiligen Borste an die Grundplatte. Hierdurch lässt sich insbesondere die Dauerfestigkeit des Förderteppichs verbessern. Besonders zweckmäßig ist dabei eine Konfiguration, bei welcher der Borstenquerschnitt im Fußbereich in der Höhenrichtung von der Grundplatte bis zum Federbereich abnimmt. Damit liegt der größte Borstenquerschnitt unmittelbar an der Grundplatte vor, während der kleinste Borstenquerschnitt am Übergang zum Federbereich vorliegt. Außerdem kann der Borstenquerschnitt im Federbereich in der Höhenrichtung vom Fußbereich bis zum Borstenende konstant sein. Hierdurch lässt sich eine definierte Federwirkung für die jeweilige Borste realisieren. Insbesondere kann dadurch der Förderteppich an die jeweilige Transportaufgabe, also insbesondere an die Masse der zu fördernden Werkstücke und Stückgüter angepasst werden und damit individuell für die jeweilige Transportaufgabe konfektioniert werden.

Bei einer anderen Ausführungsform kann vorgesehen sein, dass das Borstenende eben ist und parallel zu einer Förderebene verläuft, die sich parallel zur Längsrichtung und parallel zur Querrichtung erstreckt. Sofern die Borsten jeweils die gleiche Borstenlänge besitzen, liegen bei dieser Ausführungsform alle Borstenenden in einer gemeinsamen Förderebene. Hierdurch kann insbesondere ein flächiger Kontakt zwischen den Borsten und dem jeweiligen Stückgut bzw. Werkstücke erreicht werden. Außerdem kann sich z.B. für zylindrische Stückgüter bzw. Werkstücke die Förderwirkung bzw. Transportwirkung verbessern, da sich die Borstenenden bei aufliegendem Werkstück bzw. Stückgut stärker neigen, wodurch sich auch die ebenen Borstenenden in der Förderrichtung neigen und das aufliegende Werkstück bzw. Stückgut entsprechend in der Förderrichtung antreiben.

Alternativ dazu ist es ebenso möglich, die ebenen Borstenenden gegenüber der Förderebene in einem Bereich von 5° bis 30° zu neigen, insbesondere so, dass ein Randabschnitt des Borstenendes, der den größten Abstand von der Grundplatte aufweist, sich auf einer von der Grundplatte abgewandten Seite der jeweiligen Borste befindet. Die ebenen Borstenenden sind dadurch insbesondere in der Förderrichtung geneigt. Je nach Borstenquerschnitt ergibt sich dadurch ein linienförmiger oder punktförmiger Kontakt zum jeweiligen Werkstück oder Stückgut. Auch kann dadurch, insbesondere für zylindrische, Werkstücke bzw. Stückgüter die Transportwirkung verbessert werden, da sich die Borstenenden bei aufliegendem Werkstück bzw. Stückgut stärker neigen, wodurch sich auch die ebenen Borstenenden stärker in der Förderrichtung neigen und das aufliegende Werkstück bzw. Stückgut entsprechend in der Förderrichtung antreiben.

Gemäß einer anderen Ausführungsform kann vorgesehen sein, dass der Federbereich gerade ausgestaltet ist und gegenüber der Höhenrichtung um einen Neigungswinkel von mindestens 10° und höchstens 45° geneigt ist. Durch die Neigung des Federbereichs gegenüber der Höhenrichtung wird einerseits die Federwirkung des Federbereichs bzw. der jeweiligen Borste verbessert. Gleichzeitig wird durch eine Orientierung des Neigungswinkels eine Förderrichtung definiert. Hierbei wird ein rechtwinkliges Richtungsdreieck berücksichtigt, dessen Hypotenuse entlang des Federbereichs verläuft, dessen Ankathete entlang der Höhenrichtung verläuft und dessen Gegenkathete die Förderrichtung bestimmt. Der Neigungswinkel ist dabei zwischen der Hypothese und der Ankathete aufgespannt.

Der Neigungswinkel kann insbesondere 10° bis 30° und vorzugsweise 10° bis 20° betragen. Außerdem kann vorgesehen sein, dass die jeweilige Borste auch im Fußbereich gegenüber der Höhenrichtung geneigt ist. Zweckmäßig weist der Fußbereich dabei dieselbe Orientierung der Neigung auf, wie der Federbereich. Auch kann bei einer einfachen Ausführungsform vorgesehen sein, dass Fußbereich und Federbereich denselben Neigungswinkel besitzen.

Bei einer anderen Ausführungsform kann der Fußbereich in derselben Richtung wie der Federbereich gegenüber der Höhenrichtung um einen Anschlusswinkel geneigt sein, der an der Grundplatte größer ist als der Neigungswinkel und entlang des Fußbereichs bis zum Federbereich gestuft oder stufenlos abnimmt und am Federbereich in den Neigungswinkel übergeht, vorzugsweise tangetial. Damit besitzt der Fußbereich einen in der Höhenrichtung variierenden Anschlusswinkel gegenüber der Höhenrichtung. Untersuchungen haben gezeigt, dass bei einer derartigen Konfiguration eine besonders hohe Dauerstabilität für die Borsten und somit für den Förderteppich realisierbar ist.

Entsprechend einer besonders vorteilhaften Ausführungsform kann auf der Grundplatte durch Aufdrucken der Borsten ein erster Teppichabschnitt ausgebildet sein, in dem die Borsten parallel zueinander verlaufen und der Neigungswinkel der Borsten bezüglich der Längsrichtung so orientiert ist, dass die Borsten eine erste gerade Förderrichtung entlang des Förderteppichs definieren. Außerdem kann auf derselben Grundplatte durch Aufdrucken der Borsten ein zweiter Teppichabschnitt ausgebildet sein, in dem die Borsten parallel zueinander verlaufen und der Neigungswinkel der Borsten bezüglich der Längsrichtung so orientiert ist, dass die Borsten eine zweite gerade Förderrichtung entlang des Förderteppichs definieren. Zweckmäßig kann nun außerdem vorgesehen sein, dass die zweite Förderrichtung um eine parallel zur Höhenrichtung verlaufende Drehachse zur ersten Förderrichtung gedreht ist. Damit lässt sich entlang des Förderteppichs die Förderrichtung verändern. Beispielsweise kann die zweite Förderrichtung um 30° oder um 45° oder um 60° oder um 75° oder um 90° gegenüber der ersten Förderrichtung gedreht sein. Damit lassen sich auf einem einzigen Förderteppich, der mithilfe des 3D-Drucks in einem einzigen Stück hergestellt ist, variierende Förderrichtungen realisieren, ohne dass hierzu ein Zuschnitt des Förderteppichs erforderlich ist. Damit lassen sich Förderteppiche mit einem beliebigen Verlauf der Förderrichtung auf Wunsch konfektionieren. Der zweite Teppichabschnitt kann in der Längsrichtung unmittelbar an den ersten Teppichabschnitt anschlie-ßen. Ebenso ist denkbar, mehr als zwei Teppichabschnitte mit unterschiedlichen Förderrichtungen auf derselben, einstückig zusammenhängenden Grundplatte auszubilden.

Bei einer anderen Ausführungsform kann vorgesehen sein, dass auf der Grundplatte durch Aufdrucken der Borsten ein Teppichabschnitt ausgebildet ist, in dem die Orientierung der Neigungswinkel der Borsten bezüglich der Längsrichtung entlang des Förderteppichs so variiert, dass die Borsten eine gekrümmte Förderrichtung entlang des Förderteppichs definieren. Die Krümmung der Förderrichtung ist dabei vorzugsweise bogenförmig, wobei hier ein Bogen mit variierendem Radius, insbesondere ein elliptischer Bogen, oder ein Bogen mit konstantem Radius, insbesondere ein kreisförmiger Bogen, realisierbar ist. Insbesondere kann dabei vorgesehen sein, dass alle Borsten denselben Neigungswinkel, jedoch mit variierender Orientierung zur Längsrichtung aufweisen. Damit lässt sich auf einem einstückigen Förderteppich eine gekrümmte Förderrichtung realisieren, beispielsweise um einen Bogen bezüglich eines Radius zu erzeugen, der senkrecht auf einer parallel zur Höhenrichtung verlaufenden Achse steht. Insbesondere ist denkbar, mithilfe eines derartigen Teppichabschnitts eine Umlenkung der Förderrichtung um jeden beliebigen Winkel von 1 ° bis 360° zu erzeugen, beispielsweise eine Umlenkung um 30° oder 45° oder 90° oder 180° oder 270° oder 360°. Beispielsweise können die Werkstücke bzw. Stückgüter auch im Kreis gefördert werden. Ferner lässt sich damit innerhalb desselben Förderteppichs, also auf einer gemeinsamen Grundplatte ein derartiger Teppichabschnitt mit gekrümmter Förderrichtung zwischen zwei Teppichabschnitten mit jeweils gerader Förderrichtung ausbilden. Insbesondere kann ein derartiger Teppichabschnitt mit 90°-Umlenkung zwischen einem ersten Teppichabschnitt, dessen Förderrichtung parallel zur Längsrichtung verläuft, und einem zweiten Teppichabschnitt angeordnet sein, dessen Förderrichtung parallel zur Querrichtung verläuft.

Zur Realisierung eines Teppichabschnitts mit gekrümmter Förderrichtung kann der Teppichabschnitts mehrere in der gekrümmten Förderrichtung aufeinanderfolgende Borstenreihen aufweisen, die quer zur Förderrichtung mehrere parallel zueinander verlaufende Borsten aufweisen. Die Orientierung der Neigungswinkel gegenüber der Längsrichtung entlang des Förderteppichs variiert dabei von Borstenreihe zu Borstenreihe. Beispielsweise nimmt eine Drehung gegenüber der Längsrichtung von Borstenreihe zu Borstenreihe zu, beispielsweise bei einem 90°-Bogen um einen Übergang von einer parallel zur Längsrichtung verlaufenden Förderrichtung in eine parallel zur Querrichtung verlaufenden Förderrichtung zu schaffen. Die Borsten können innerhalb der jeweiligen Borstenreihe geradlinig angeordnet sein. Ferner können sich die geraden Borstenreihen bei einem kreisförmigen Bogen bezüglich eines gemeinsamen gedachten Mittelpunktes radial erstrecken.

Bei einer anderen Ausführungsform können die Borsten in der Längsrichtung einen konstanten Längsabstand und in der Querrichtung einen konstanten Querabstand voneinander aufweisen. Insbesondere kann dabei vorgesehen sein, dass der Querabstand kleiner ist als der Längsabstand. Hierbei wird berücksichtigt, dass sich die Borsten während des Betriebs der Fördereinrichtung in der Höhenrichtung elastisch verformen können, um die gewünschte Federwirkung zu erzeugen. Durch den größeren Längsabstand kann dabei eine Kollision benachbarter Borsten vermieden werden.

Bei einer anderen Ausführungsform kann vorgesehen sein, dass das Borsten, die in der Längsrichtung benachbart sind, in der Querrichtung zueinander versetzt sind, wobei dieser Versatz vorzugsweise um die Hälfte der Summe aus Querabstand und in der Querrichtung gemessener Borstenbreite erfolgt. Durch die versetzte Anordnung der Borsten lässt sich eine vergleichsweise hohe Dichte für die Borsten auf der Grundplatte realisieren. Eine hohe Borstendichte sorgt für eine vergleichsweise hohe Traglast und effiziente Förderwirkung.

Gemäß einer anderen vorteilhaften Ausführungsform kann vorgesehen sein, dass der Förderteppich zumindest eine Begrenzungswand aufweist, die in der Höhenrichtung von der Grundplatte absteht, die sich entlang einer Förderrichtung eines die Borsten aufweisenden Teppichabschnitts des Förderteppichs erstreckt und die quer zur Förderrichtung an den Teppichabschnitt anschließt. Insbesondere bei einem Teppichabschnitt mit gekrümmter Förderrichtung oder bei Teppichabschnitten mit sich ändernder Förderrichtung kann mithilfe einer derartigen Begrenzungswand ein Herabfallen der geförderten Stückgüter bzw. Werkstücke vom Förderteppich quer zur Förderrichtung vermieden werden. Ebenso kann eine derartige Begrenzungswand auch bei Teppichabschnitten mit gerade Förderrichtung dazu genutzt werden, einen abrasiven Kontakt der transportierten Werkstücke bzw. Stückgüter mit seitlichen Wänden der Förderstrecke zu vermeiden. Besonders zweckmäßig ist dabei eine Konfiguration, bei der die jeweilige Begrenzungswand mittels 3D-Druck auf die Grundplatte aufgedruckt ist. Damit kann der Förderteppich bereits während seiner Herstellung mit einer derartigen Begrenzungswand ausgestattet werden. Auch hier ist denkbar, den Förderteppich mitsamt der Begrenzungswand maßgeschneidert für die jeweilige Fördereinrichtung zu konfektionieren.

Die Borsten können grundsätzlich beliebige Querschnitte aufweisen. Denkbar sind runde, insbesondere kreisförmige, Querschnitte. Bevorzugt sind jedoch polygonale Querschnitte, wie zum Beispiel sechseckige oder achteckige Querschnitte. Ebenso sind rechteckige und insbesondere quadratische Querschnitte denkbar, insbesondere flache Rechtequerschnitte.

Gemäß einer anderen Ausführungsform kann vorgesehen sein, dass auf derselben Grundplatte zumindest ein erster Teppichabschnitt und ein zweiter Teppichabschnittausgebildet sind, wobei die Borsten innerhalb des ersten Teppichabschnitts hinsichtlich einer in der Höhenrichtung gemessenen Borstenhöhe und eines quer zur Borstenlängsrichtung verlaufenden Borstenquerschnitts innerhalb eines Federbereichs der jeweiligen Borste und eines in der Längsrichtung gemessenen Längsabstands zu benachbarten Borsten und eines in der Querrichtung gemessenen Querabstands zu benachbarten Borsten und eines Neigungswinkels gegenüber der Horizontalrichtung identisch sind, wobei die Borsten innerhalb des zweiten Teppichabschnitts hinsichtlich der Borstenhöhe und des Borstenquerschnitts und des Längsabstands und des Querabstands und des Neigungswinkels identisch sind. Zweckmäßig kann nun außerdem vorgesehen sein, dass sich die Borsten des ersten Teppichabschnitts und die Borsten des zweiten Teppichabschnitts hinsichtlich der Borstenhöhe und/oder des Borstenquerschnitts und/oder des Längsabstands und/oder des Querabstands und/oder des Neigungswinkels voneinander unterscheiden. Die genannten Parameter der Borsten beeinflussen die Fördereigenschaft des jeweiligen Teppichabschnitts. Somit ist es auf diese Weise möglich, auf derselben Grundplatte Teppichabschnitte mit unterschiedlichen Fördereigenschaften zu realisieren. Beispielsweise kann durch die Veränderung dieser Parameter der Borsten die Fördergeschwindigkeit verändert werden. Beispielsweise kann durch eine Erhöhung der Fördergeschwindigkeit eine Vereinzelung der Stückgüter bzw. Werkstücke erreicht werden.

Bei einer anderen Ausführungsform kann vorgesehen sein, dass auf der Grundplatte ein Teppichabschnitt ausgebildet ist, bei dem die Borsten entlang der Längsrichtung hinsichtlich einer in der Höhenrichtung gemessenen Borstenhöhe und/oder eines quer zur Borstenlängsrichtung verlaufenden Borstenquerschnitts innerhalb eines Federbereichs der jeweiligen Borste und/oder eines in der Längsrichtung gemessenen Längsabstands zu benachbarten Borsten und/oder eines in der Querrichtung gemessenen Querabstands zu benachbarten Borsten und/oder eines Neigungswinkels gegenüber der Horizontalrichtung variieren. Hier variieren die genannten Parameter innerhalb des jeweiligen Teppichabschnitts. Mit Hilfe eines solchen Teppichabschnitts lässt sich beispielsweise ein Übergang zwischen zwei Teppichabschnitten mit stark voneinander abweichenden Parametern für die Borsten schaffen.

Zweckmäßig kann dabei optional vorgesehen sein, dass die Borstenhöhe und/oder der Borstenquerschnitt und/oder der Längsabstand und/oder der Querabstand und/oder der Neigungswinkel in der Längsrichtung gestuft oder stufenlos zunimmt oder abnimmt. Bei einer gestuften Veränderung des jeweiligen Parameters können die Borsten innerhalb des Teppichabschnitts Gruppen bilden, die aufeinander folgen und jeweils mehrere benachbarte Borsten umfassen. Der jeweilige Parameter ist bei den Borsten derselben Gruppe dann konstant, während er von Gruppe zu Gruppe variiert. Bei einer stufenlosen Veränderung des jeweiligen Parameters variiert der jeweilige Parameter von Borste zu Borste.

Bei einer anderen Ausführungsform kann vorgesehen sein, dass sich die Grundplatte mit ihrer Längsrichtung spiralförmig und schraubenförmig um eine parallel zur Höhenrichtung verlaufende Zentralachse über mindestens 30° erstreckt. Insbesondere bei einer als Fördertopf ausgestalteten Vibrationsfördereinrichtung kann sich die Förderstrecke schraubenförmig und spiralförmig erstrecken. Durch die hier vorgeschlagene Ausgestaltung des Förderteppichs lässt sich eine solche spiralförmige und schraubenförmige Förderstrecke mit einem solchen Förderteppich belegen. Dabei können zum Abdecken der gesamten Förderstrecke mehrere separate Förderteppiche zum Einsatz kommen, die dann jeweils nur einem Segment der Förderstrecke zugeordnet sind. Ebenso ist gemäß einer besonders vorteilhaften Ausführungsform denkbar, dass sich die Grundplatte mit ihrer Längsrichtung spiralförmig und schraubenförmig um eine parallel zur Höhenrichtung verlaufende Zentralachse über mindestens 360° oder über mindestens 720° erstreckt.

Eine andere Ausführungsform schlägt optional vor, dass sich die Grundplatte mit ihrer Längsrichtung entlang einer Kurve von mindestens 30° erstreckt und dass die Grundplatte quer zur Längsrichtung gegenüber der Horizontalrichtung so geneigt ist, dass die Grundplatte in der Querrichtung zur Kurvenaußenseite hin abfällt. Durch diese Ausgestaltung des Förderteppichs werden die Stückgüter bzw. Werkstücke gegen eine an der Kurvenaußenseite angeordnete Begrenzungswand oder Führungswand gefördert, so dass ein Herabfallen der Stückgüter bzw. Werkstücke an einer Kurveninnenseite vermieden werden kann. Die jeweilige Begrenzungswand bzw. Führungswand kann dabei ein Bestandteil der Förderstrecke bzw. der Vibrationsfördereinrichtung oder ein Bestandteil des Förderteppichs sein.

Eine erfindungsgemäße Vibrationsfördereinrichtung, die zum Fördern von Stückgütern oder Werkstücken dient, ist mit einer Förderstrecke, mit einer Vibrationseinrichtung, welche die Förderstrecke zu Vibrationen anregt, und mit wenigstens einem auf der Förderstrecke angeordneten Förderteppich der vorstehend beschriebenen Art ausgestattet. Die Vibrationsfördereinrichtung kann insbesondere als Fördertopf ausgestaltet sein, der eine sich spiralförmig und schraubenförmig erstreckende Förderstrecke aufweist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den durch die Ansprüche definierten Rahmen der Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Figur 1: eine isometrische Ansicht einer Vibrationsfördereinrichtung, die mit einem Förderteppich ausgestattet ist,
- Figur 2: eine isometrische Ansicht eines Abschnitts des Förderteppichs,
- Figur 3: eine andere isometrische Ansicht eines Abschnitts des Förderteppichs,
- Figur 4: eine weitere isometrische Ansicht eines Abschnitts des Förderteppichs bei einer anderen Ausführungsform,
- Figur 5: eine stark vereinfachte Seitenansicht eines Abschnitts des Förderteppichs bei einer weiteren Ausführungsform,
- Figur 6: eine Draufsicht auf eine Borste des Förderteppichs bei einer anderen Ausführungsform,
- Figur 7: eine Seitenansicht der Borste aus Figur 6,
- Figur 8: eine Draufsicht auf einen Abschnitt des Förderteppichs mit den Borsten aus den Figuren 6 und 7,
- Figur 9: eine Draufsicht des Förderteppichs mit einer geraden Förderrichtung,
- Figur 10: eine Draufsicht des Förderteppichs mit zwei Teppichabschnitten, die jeweils eine gerade Förderrichtung aufweisen,
- Figur 11: eine Draufsicht wie in Figur 10, jedoch bei einer anderen Ausführungsform,
- Figur 12: eine Draufsicht auf einen Teppichabschnitt mit gekrümmter Förderrichtung,
- Figur 13: eine isometrische Ansicht des Förderteppichs mit einer Begrenzungswand,
- Figur 14: eine vereinfachte Seitenansicht des Förderteppichs im Bereich mehrerer Borsten,
- Figur 15: eine Seitenansicht wie in Figur 14, jedoch bei einer anderen Ausführungsform,
- Figur 16: eine Seitenansicht wie in den Figuren 14 und 15, jedoch bei variierender Borstenhöhe,
- Figur 17: eine Seitenansicht wie in den Figuren 14 bis 16, jedoch bei variierendem Borstenquerschnitt,
- Figur 18: eine Seitenansicht wie in den Figuren 14 bis 17, jedoch bei variierendem Borstenabstand,
- Figur 19: eine Seitenansicht wie in den Figuren 14 bis 18, jedoch bei variierender Borstenneigung,
- Figur 20: eine Draufsicht auf eine als Fördertopf ausgestaltete Vibrationsfördereinrichtung, deren Förderstrecke mit einem Förderteppich belegt ist,
- Figur 21: eine isometrische Ansicht der Borsten eines Abschnitts eines sich spiralförmig und schraubenförmig erstreckenden Förderteppichs,
- Figur 22: eine Draufsicht wie in Figur 20, bei der die Förderstrecke segmentweise mit separaten Förderteppichen belegt ist,
- Figur 23: eine isometrische Ansicht eines räumlich gekrümmten Förderteppichs,
- Figur 24: eine andere isometrische Ansicht des räumlich gekrümmten Förderteppichs,
- Figur 25: ein Querschnitt eines als Halbrohr konfigurierten Förderteppichs,
- Figur 26: eine Draufsicht auf einen Abschnitt des Förderteppichs aus Figur 25,
- Figur 27: eine isometrische Ansicht des Förderteppichs aus Figur 25.

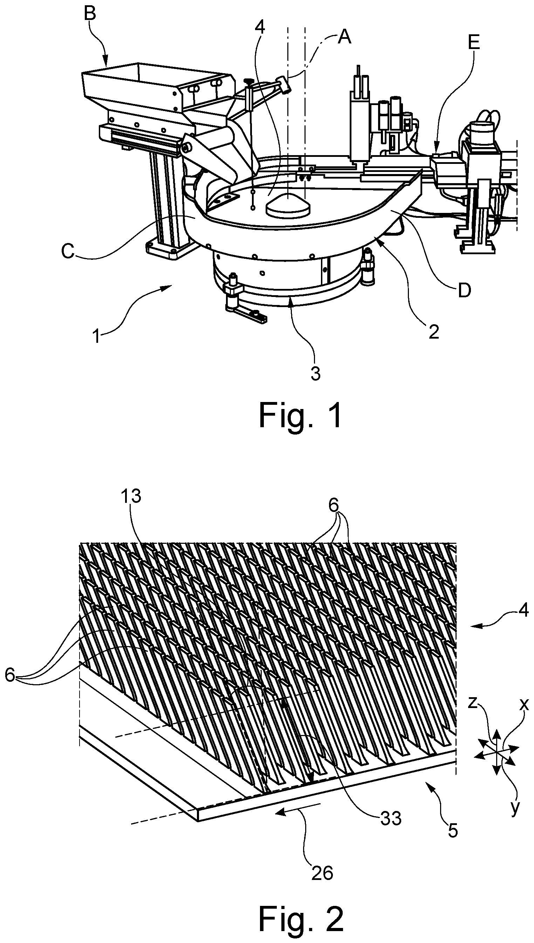

Entsprechend Figur 1 umfasst eine Vibrationseinrichtung 1, die zum Fördern von hier nicht gezeigten Stückgütern oder Werkstücken dient, eine Förderstrecke 2 und eine Vibrationseinrichtung 3. Die Förderstrecke 2 definiert den Weg oder Pfad, entlang dem die Stückgüter oder Werkstücke gefördert werden sollen. Die Vibrationseinrichtung 3 ist so konfiguriert und somit der Förderstrecke 2 gekoppelt, dass sie die während des Betriebs der Vibrationseinrichtung 1 die Förderstrecke 2 zu Vibrationen anregt, insbesondere in Form kreisförmiger Schwingungen oder in Form einer Kombination von Vertikalschwingungen und Horizontalschwingungen. Auf der Förderstrecke 2 ist wenigstens ein Förderteppich 4 angeordnet. Im Beispiel der Figur 1 definiert die Förderstrecke 2 bezüglich einer vertikalen Achse A einen Dreiviertelkreis C, der rechts von der Achse A in einen geraden Abschnitt D übergeht, der die Stückgüter bzw. Werkstücke z.B. einer Maschine E zur Vermessung oder Sortierung oder Bearbeitung oder dergleichen zuführt. Die Stückgüter oder Werkstücke werden dem Dreiviertelkreis C links von der Achse A der Förderstrecke 2 z.B. mittels einer Schütteinrichtung B zugeführt und werden auf dem Förderteppich 4 dann im Gegenuhrzeigersinn im gezeigten Beispiel über 270° kreisbogenförmig um die Achse A gefördert. Zunächst bewegen sich die Werkstücke bzw. Stückgüter dabei links von der Achse A nach vorn, also auf den Betrachter der Figur 1 zu, dann quasi vor der Achse A von links nach rechts und dann rechts von der Achse A nach hinten, also vom Betrachter der Figur 1 weg. Dabei erreichen die Werkstücke bzw. Stückgüter rechts von der Achse A den geraden Abschnitt D. Im geraden Abschnitt D werden die Werkstücke bzw. Stückgüter dann hinten zur Maschine E gefördert.

Gemäß den Figuren 2 bis 15 weist der Förderteppich 4 eine Grundplatte 5 auf, die eine Längsrichtung X, eine Querrichtung Y und eine Höhenrichtung Z definiert, die senkrecht zueinander verlaufen. Bei den hier gezeigten Beispielen ist die Grundplatte 5 eben konfiguriert und außerdem flach konfiguriert. In der Folge definieren die Längsrichtung X und die Querrichtung Y eine Grundplattenebene, in der sich die Grundplatte 5 erstreckt, während die Höhenrichtung Z eine senkrecht zur Grundplattenebene verlaufende Dickenrichtung der Grundplatte 5 definiert.

Außerdem weist der Förderteppich 4 eine Vielzahl von Borsten 6 auf, die in der Höhenrichtung Z von der Grundplatte 5 abstehen. Beim hier vorgestellten Förderteppich 4 sind die Borsten 6 mittels 3D-Druck hergestellt und auf die Grundplatte 5 unmittelbar aufgedruckt. Grundsätzlich kann auch die Grundplatte mittels 3D-Druck hergestellt sein. Im 3D-Druck werden dann zunächst die Grundplatte 5 und anschließend unmittelbar darauf die Borsten 6 erzeugt.

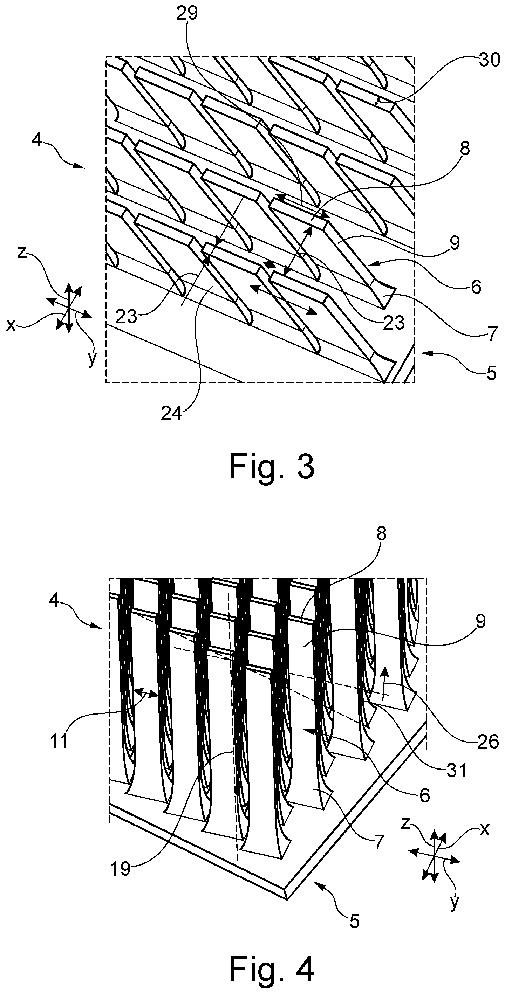

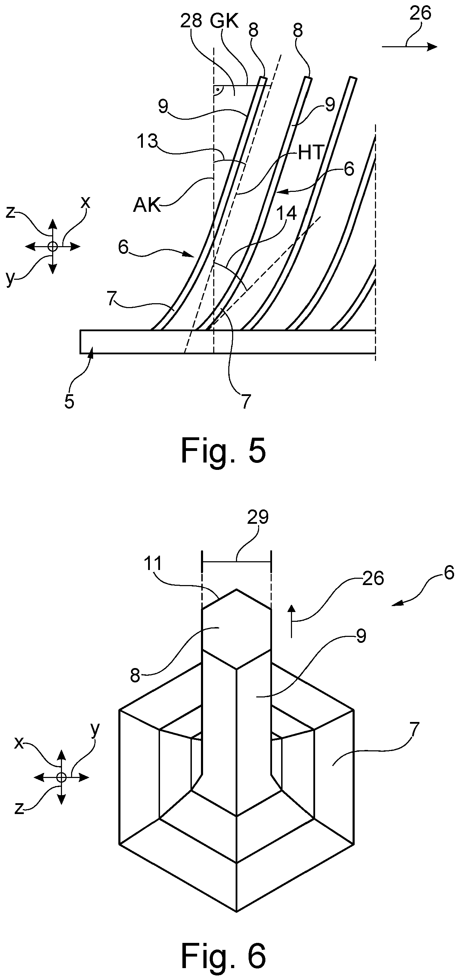

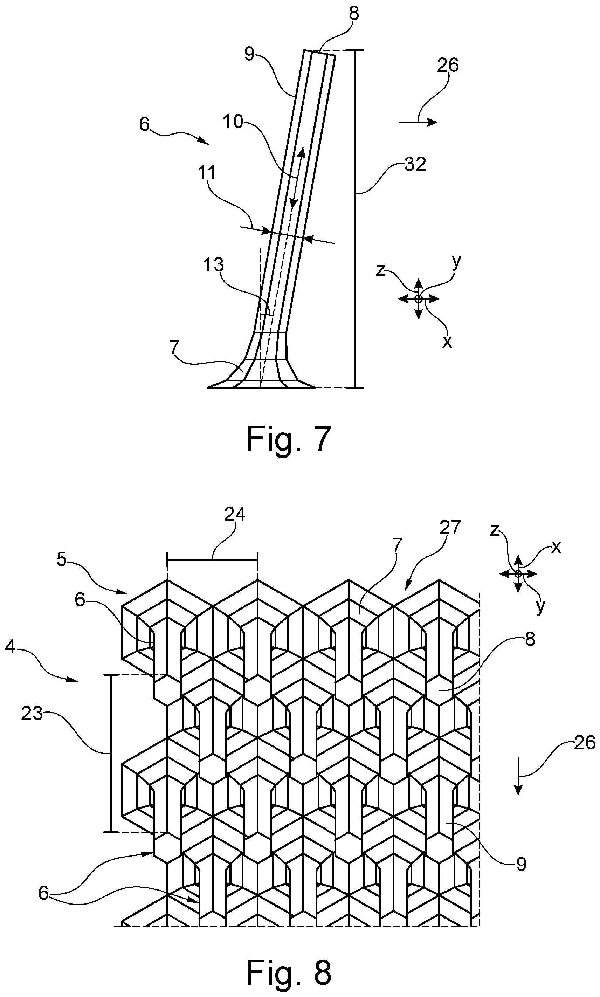

Wie sich insbesondere den vergrößerten Ansichten der Figuren 3 bis 8, 14 und 15 entnehmen lässt, weisen die Borsten 6 jeweils einen Fußbereich 7, ein Borstenende 8 und einen Federbereich 9 auf. Der Fußbereich 7 ist mit der Grundplatte 5 verbunden. Das Borstenende 8 ist von der Grundplatte 5 entfernt angeordnet. Der Federbereich 9 verbindet den Fußbereich 7 mit dem Borstenende 8. Gemäß Figur 7 weist die jeweilige Borste 6 eine Borstenlängsrichtung 10 auf, sowie einen quer zur Borstenlängsrichtung 10 verlaufenden Borstenquerschnitt 11. Zumindest bei den Ausführungsformen der Figuren 6 bis 8, 14 und 15 ist der Borstenquerschnitt 11 im Fußbereich 7 größer als im Federbereich 9. Dabei ist die Formgebung für den Fußbereich 7 hier so gewählt, dass der Borstenquerschnitt 11 im Fußbereich 7 in der Höhenrichtung Z von der Grundplatte 5 bis zum Federbereich 9 abnimmt. Im Federbereich 9 selbst ist der Borstenquerschnitt 11 in der Höhenrichtung Z vom Fußbereich 7 bis zum Borstenende 8 konstant. In den Beispielen der Figuren 2 bis 4 nimmt der Borstenquerschnitt 11 innerhalb des Fußbereichs 7 in der Höhenrichtung Z stufenlos ab. In den Beispielen der Figuren 6 bis 8, 14 und 15 nimmt der Borstenquerschnitt 11 innerhalb des Fußbereichs 7 in der Höhenrichtung Z gestuft bzw. in mehreren Stufen stufenlos ab. In Figur 7 sind drei Stufen erkennbar, die durch Stufen ineinander übergehen, wobei innerhalb der jeweiligen des Fußbereichs 7 der Borstenquerschnitt 11 stufenlos abnimmt.

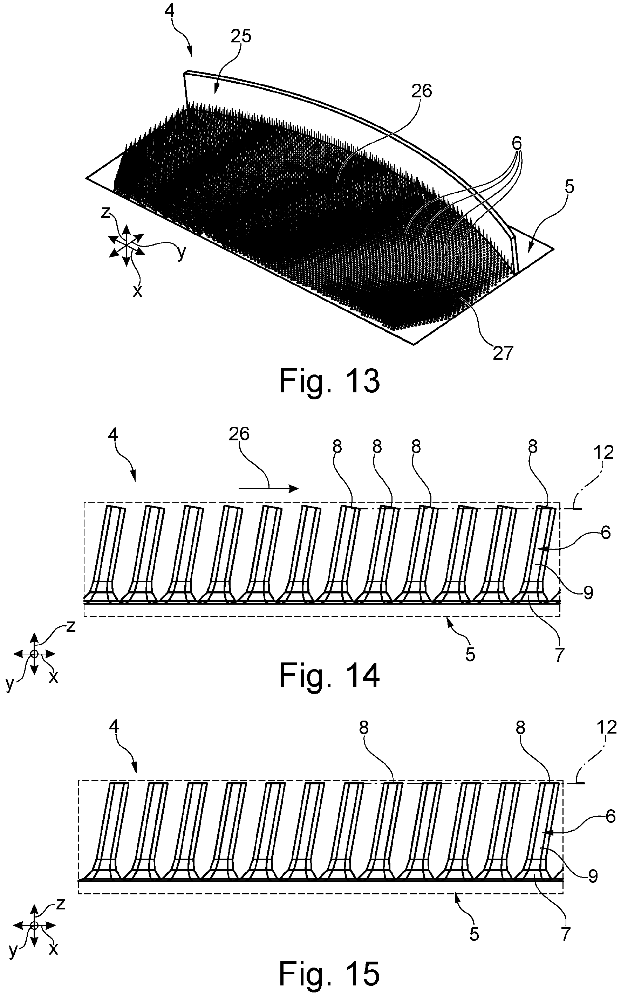

In Figur 14 ist eine Konfiguration gezeigt, bei der die Borstenenden 8 eben sind und dabei gegenüber einer Förderebene 12 geneigt sind, die sich parallel zu einer Förderrichtung 26 des Förderteppichs 4 erstreckt. Diese Förderebene 12 erstreckt sich bei einer ebenen Grundplatte 5 parallel zur Längsrichtung X und parallel zur Querrichtung Y. Die Neigung der ebenen Borstenenden 8 gegenüber der Förderebene 12 kann beispielsweise in einem Bereich von 5° bis 20° liegen. Im Beispiel der Figur 14 ist die Neigung der ebenen Borstenenden 8 gegenüber der Förderebene 12 so orientiert, dass ein in Figur 14 linker Randabschnitt des jeweiligen Borstenendes 8 den größten Abstand von der Grundplatte 5 aufweist und sich auf der von der Grundplatte 5 abgewandten Seite der jeweiligen Borste 6 befindet. Damit sind die Borstenenden 8 gegenüber der Förderebene 12 so geneigt, dass sich das Borstenende 8 in der Förderrichtung 26 der Grundplatte 5 annähert.

Im Unterschied dazu zeigt Figur 15 eine Konfiguration, bei der das Borstenende 8 ebenfalls eben ist und dabei parallel zur Förderebene 12 verläuft. Gezeigt ist in den Figuren 14 und 15 jeweils ein unbelasteter Zustand des Förderteppichs 4, so dass kein Werkstück oder Stückgut auf den Borsten 6 aufliegt.

Bei den hier gezeigten Ausführungsformen des Förderteppichs 4 ist der Federbereich 9 insbesondere gemäß den Figuren 2, 5 und 7 weitgehend gerade ausgestaltet und gegenüber der Höhenrichtung Z um einen Neigungswinkel 13 geneigt. Dieser Neigungswinkel 13 liegt dabei bevorzugt in einem Bereich von 10° bis 45°. Der Neigungswinkel 13 kann insbesondere in einem Bereich von 10° bis 30° liegen. Bevorzugte Neigungswinkel sind 10° oder 20°. Durch den Neigungswinkel 13 wird eine Förderrichtung 26 des Förderteppichs 4 definiert, die in den Figuren 2, 5 bis 9, 14 und 15 jeweils durch einen Pfeil angedeutet ist. Die Förderrichtung 26 ergibt sich dabei aus einem in Figur 5 exemplarisch eingetragenen Richtungsdreieck 28, bei dem es sich um ein rechtwinkliges Dreieck handelt. Der Neigungswinkel 13 ist dabei zwischen der Hypotenuse HT des Richtungsdreiecks 28 und der Ankathete AK des Richtungsdreiecks 28 aufgespannt. Die Gegenkathete GK definiert nun die Förderrichtung 26 und ist dabei von der Ankathete AK zur Hypotenuse HT orientiert.

Wie sich insbesondere den der Figur 5 entnehmen lässt, kann bei einer Ausführungsform vorgesehen sein, dass der Fußbereich 7 in derselben Richtung wie der Federbereich 9 gegenüber der Höhenrichtung Z geneigt ist, und zwar um einen Anschlusswinkel 14. Diese Anschlusswinkel 14 ist dabei an der Grundplatte 5 größer als der Neigungswinkel 13 und nimmt entlang des Fußbereichs 7 bis zum Federbereich 9 ab und geht am Federbereich 9 in den Neigungswinkel 13 über. Im Beispiel der Figur 5 ist dieser Übergang tangential ausgestaltet.

Alternativ dazu zeigen die Figuren 6 bis 8, 14 und 15 Konfigurationen, bei denen der Fußbereich 7 durchgehend mit dem Neigungswinkel 13 gegenüber der Höhenrichtung Z geneigt ist, sodass die jeweilige Borste 6 im Fußbereich 7 und im Federbereich 9 durchgehend den gleichen Neigungswinkel 13 aufweist. Mit anderen Worten, bei diesen Beispielen ist der Anschlusswinkel 14 konstant und gleich dem Neigungswinkel 13.

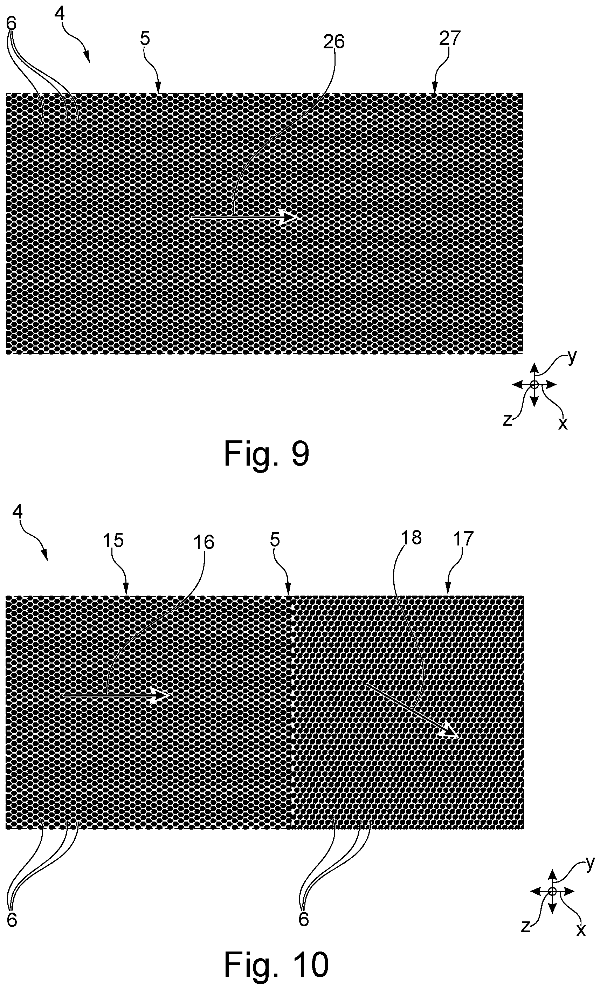

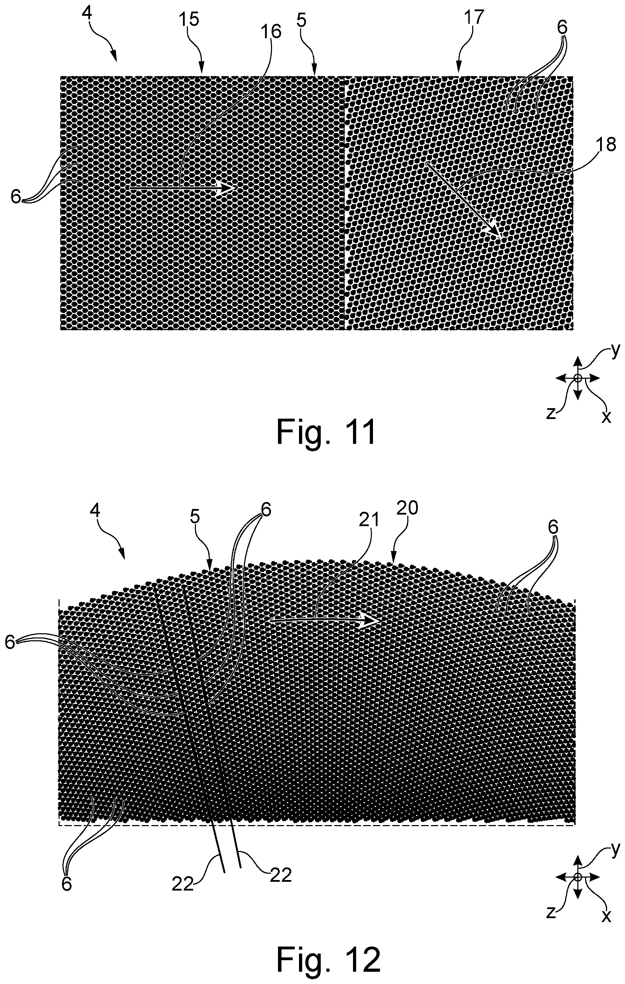

Figur 9 zeigt einen Teppichabschnitt 27, in dem alle auf derselben Grundplatte 5 aufgedruckten Borsten 6 parallel zueinander verlaufen und eine gerade Förderrichtung 26 definieren, die hier rein exemplarisch parallel zur Längsrichtung X orientiert ist. Im Unterschied dazu zeigen die Figuren 10 und 11 jeweils ein Beispiel, bei der ein erster Teppichabschnitt 15 und ein zweiter Teppichabschnitt 17 auf derselben Grundplatte 5 unmittelbar aneinander anschließen. Innerhalb des ersten Teppichabschnitts 15 verlaufen die Borsten 6 parallel zueinander, wobei der Neigungswinkel 13 der Borsten 6 bezüglich der Längsrichtung X so orientiert ist, dass die Borsten 6 eine erste gerade Förderrichtung 16 entlang des Förderteppichs 4 definieren. Im Beispiel der Figuren 10 und 11 erstreckt sich diese erste Förderrichtung 16 beispielsweise parallel zur Längsrichtung X. Im zweiten Teppichabschnitt 17 verlaufen die Borsten 6 ebenfalls parallel zueinander, wobei ihm zweiten Teppichabschnitt 17 der Neigungswinkel 13 der Borsten 6 bezüglich der Längsrichtung X so orientiert ist, dass die Borsten 6 eine zweite gerade Förderrichtung 18 entlang des Förderteppichs 4 definieren, wobei diese zweite Förderrichtung 18 um eine parallel zur Höhenrichtung Z verlaufende Drehachse 19 zur ersten Förderrichtung 16 gedreht ist. Diese Drehachse 19 steht in den Figuren 10 und 11 senkrecht auf der Zeichnungsebene, ist jedoch in Figur 4 erkennbar. In Figur 4 ist auch ein Drehwinkel 31 von etwa 15° eingezeichnet, mit dem die Förderrichtung 26 gegenüber der Längsrichtung X gedreht ist. In Figur 4 ist der Drehwinkel 31 zwischen einer Geraden, die senkrecht zur Längsrichtung X verläuft, und einer Geraden, die senkrecht zur Förderrichtung 26 verläuft, eingetragen.

Im Beispiel der Figur 10 ist die zweite Förderrichtung 18 um etwa 30° gegenüber der Längsrichtung X geneigt und somit gegenüber der ersten Förderrichtung 16 um etwa 30° gedreht. Im Beispiel der Figur 11 ist die zweite Förderrichtung 18 etwa um 45° gegenüber der Längsrichtung X geneigt und damit etwa um 45° gegenüber der ersten Förderrichtung 16 gedreht.

Im Beispiel der Figur 12 ist auf der Grundplatte 5 ein Teppichabschnitt 20 ausgebildet, in dem die Orientierung der Neigungswinkel 13 der Borsten 6 bezüglich der Längsrichtung X entlang des Förderteppichs 4 so variiert, dass die Borsten 6 eine gekrümmte Förderrichtung 21 entlang des Förderteppichs 4 definieren. Die Förderrichtung 21 ist im Beispiel der Figur 12 rein exemplarisch als Kreisbogenabschnitt ausgebildet. Der zugehörige Teppichabschnitt 20 erzeugt eine Umlenkung um etwa 30°. Im Beispiel der Figur 12 wird dies dadurch erreicht, dass in diesem Teppichabschnitt 20 mehrere in der gekrümmten Förderrichtung 21 aufeinanderfolgende Borstenreihen 22 vorgesehen sind, die quer zur Förderrichtung 21 jeweils mehrere parallel zueinander verlaufende Borsten 6 aufweisen. Die Orientierung der Neigungswinkel 13 gegenüber der Längsrichtung X variiert dabei entlang des Förderteppichs 4 von Borstenreihe 22 zu Borstenreihe 22. Damit ändert sich die Förderrichtung 21 von Borstenreihe 22 zu Borstenreihe 22 schrittweise, wodurch sich die gekrümmte Förderrichtung 21 entlang der Borstenreihen 22 ergibt.

Gemäß den Figuren 3 und 8 können Borsten 6 in der Längsrichtung X einen konstanten Längsabstand 23 und in der Querrichtung Y einen konstanten Querabstand 24 voneinander aufweisen. Außerdem besitzen die Borsten 6 hier eine in der Querrichtung Y gemessene Borstenbreite 29 sowie eine in der Längsrichtung X gemessene Borstendicke 30. Üblicherweise ist dabei der Querabstand 24 kleiner als der Längsabstand 23. Des Weiteren kann den Figuren 3 und 8 entnommen werden, dass Borsten 6, die in der Längsrichtung X benachbart sind, in der Querrichtung Y zueinander versetzt sind. Dieser Versatz beträgt dabei vorzugsweise etwa die Hälfte der Summe aus Querabstand 24 und Borstenbreite 29. In den Beispielen der Figuren 2 bis 5 besitzen die Borsten 6 einen rechteckigen flachen Querschnitt 11. In den Beispielen der Figuren 6 bis 15 besitzen die Borsten 6 einen sechseckigen Querschnitt 11.

Figur 13 zeigt eine besondere Ausführungsform, bei welcher der Förderteppich 4 zumindest eine Begrenzungswand 25 aufweist, die in der Höhenrichtung Z von der Grundplatte 5 absteht. Die Begrenzungswand 25 erstreckt sich dabei entlang der Förderrichtung 26 des Teppichabschnitts 27, der die Borsten 6 aufweist. Dabei schließt die Begrenzungswand 25 quer zu dieser Förderrichtung 26 an diesen Teppichabschnitt 27 an. Vorzugsweise ist die Begrenzungswand 25 mittels 3D-Druck auf die Grundplatte 5 aufgedruckt. Insbesondere kann somit der Förderteppich 4 mit der Grundplatte 5, mit den Borsten 6 und mit der jeweiligen Begrenzungswand 25 mittels 3D-Druck als ein einziges zusammenhängendes Bauteil hergestellt werden.

Der Teppichabschnitt 27 bezeichnet allgemein jeglichen mit Borsten 6 versehenen Teppichabschnitt, also insbesondere auch den ersten Teppichabschnitt 15 und den zweiten Teppichabschnitt 17 aus den Beispielen der Figuren 10 und 11 sowie den Teppichabschnitt 20 aus dem Beispiel der Figur 12. Die zugehörige Förderrichtung 26 gilt dann dementsprechend auch für die geradlinige erste Förderrichtung 16 und die gerade zweite Förderrichtung 18 der Figuren 10 und 11 sowie für die gekrümmte Förderrichtung 21 aus Figur 12. Im Beispiel der Figur 13 ist die Förderrichtung 26 des gezeigten Teppichabschnitts 27 ebenfalls gekrümmt.

In Figur 7 ist noch eine in der Höhenrichtung Z gemessene Borstenhöhe 32 eingetragen. In Figur 2 ist noch eine in der Borstenlängsrichtung 10 gemessene Borstenlänge 33 eingetragen, die aufgrund des Neigungswinkels 13 etwas größer ist als die Borstenhöhe 32.

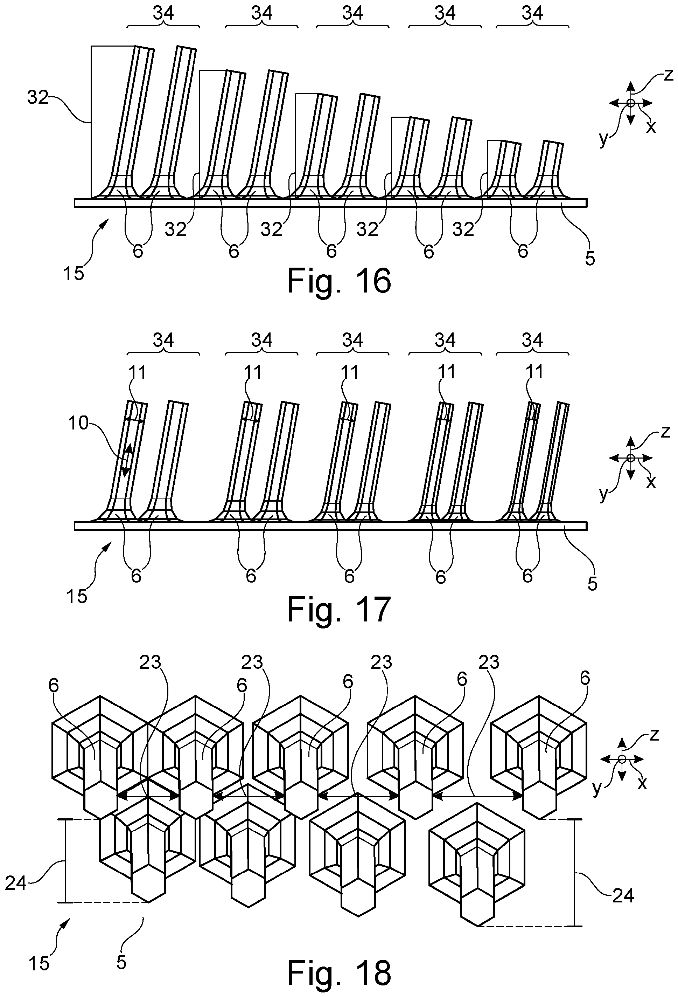

Figur 16 zeigt exemplarisch, wie innerhalb eines Teppichabschnitts 15 auf derselben Grundplatte 5 die in der Höhenrichtung Z gemessene Borstenhöhe 32 gestuft von links nach rechts abnimmt, derart, dass im Beispiel immer zwei benachbarte Borsten 6 ein Borstenpaar 34 oder eine Borstengruppe 34 bilden, wobei innerhalb des Paars 34 bzw. der Gruppe 34 die Borsten 6 die gleiche Borstenhöhe 32 aufweisen. Von Borstengruppe 34 zu Borstengruppe 34 nimmt die Borstenhöhe 32 dann von links nach rechts ab.

Figur 17 zeigt exemplarisch, wie innerhalb eines Teppichabschnitts 15 auf derselben Grundplatte 5 die quer zur Borstenlängsrichtung 10 verlaufender Borstenquerschnitt 11 gestuft von links nach rechts abnimmt, derart, dass im Beispiel immer zwei benachbarte Borsten 6 ein Borstenpaar 34 oder eine Borstengruppe 34 bilden, wobei innerhalb des Paars 34 bzw. der Gruppe 34 die Borsten 6 den gleichen Borstenquerschnitt 11 aufweisen. Von Borstengruppe 34 zu Borstengruppe 34 nimmt der Borstenquerschnitt 11 dann von links nach rechts ab.

Figur 18 zeigt exemplarisch, wie innerhalb eines Teppichabschnitts 15 auf derselben Grundplatte 5 der in der Längsrichtung X gemessene Längsabstand 23 zu benachbarten Borsten 6 und der in der Querrichtung Y gemessene Querabstand 24 zu benachbarten Borsten 6 stufenlos von links nach rechts zunehmen, derart, dass im Beispiel der Längsabstand 23 und der Querabstand 24 von einer Borste 6 zur benachbarten Borste 6 von links nach rechts zunehmen.

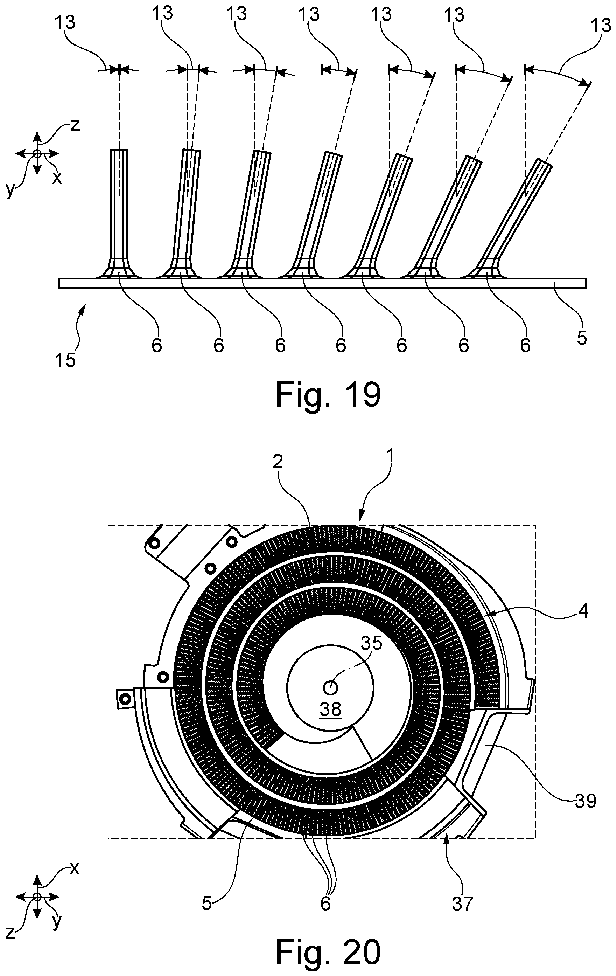

Figur 19 zeigt exemplarisch, wie innerhalb eines Teppichabschnitts 15 auf derselben Grundplatte 5 der Neigungswinkel 13 gegenüber der Horizontalrichtung Z stufenlos von links nach rechts zunimmt, derart, dass im Beispiel der Neigungswinkel 13 von einer Borste 6 zur benachbarten Borste 6 von links nach rechts zunimmt.

Damit ist es insbesondere analog zu den Figuren 10 und 11 möglich, auf derselben Grundplatte 5 zumindest einen ersten Teppichabschnitt 15 und einen zweiten Teppichabschnitt 17 auszubilden, wobei die Borsten 6 innerhalb des ersten Teppichabschnitts 15 hinsichtlich der Borstenhöhe 32, des Borstenquerschnitts 11, des Längsabstands 23, des Querabstands 24 und des Neigungswinkels 13 identisch sind, und wobei die Borsten 6 innerhalb des zweiten Teppichabschnitts 17 hinsichtlich der Borstenhöhe 32, des Borstenquerschnitts 11, des Längsabstands 23, des Querabstands 24 und des Neigungswinkels 13 identisch sind. Außerdem kann nun vorgesehen sein, dass sich die Borsten 6 des ersten Teppichabschnitts 15 und die Borsten 6 des zweiten Teppichabschnitts 17 hinsichtlich der Borstenhöhe 32 und/oder des Borstenquerschnitts 11 und/oder des Längsabstands 23 und/oder des Querabstands 24 und/oder des Neigungswinkels 13 voneinander unterscheiden. Zusätzlich oder alternativ kann analog zu den Figuren 9, 12 und 13 der Förderteppich 4 so konfiguriert sein, dass auf der Grundplatte 5 ein Teppichabschnitt 20, 27 ausgebildet ist, bei dem die Borsten 6 entlang der Längsrichtung X hinsichtlich der Borstenhöhe 32 und/oder des Borstenquerschnitts 11 und/oder des Längsabstands 23 und/oder des Querabstands 24 und/oder des Neigungswinkels 13 variieren. Dabei kann insbesondere vorgesehen sein, dass die Borstenhöhe 32 und/oder der Borstenquerschnitt 11 und/oder der Längsabstand 23 und/oder der Querabstand 24 und/oder der Neigungswinkel 13 in der Längsrichtung X gestuft oder stufenlos zunimmt oder abnimmt.

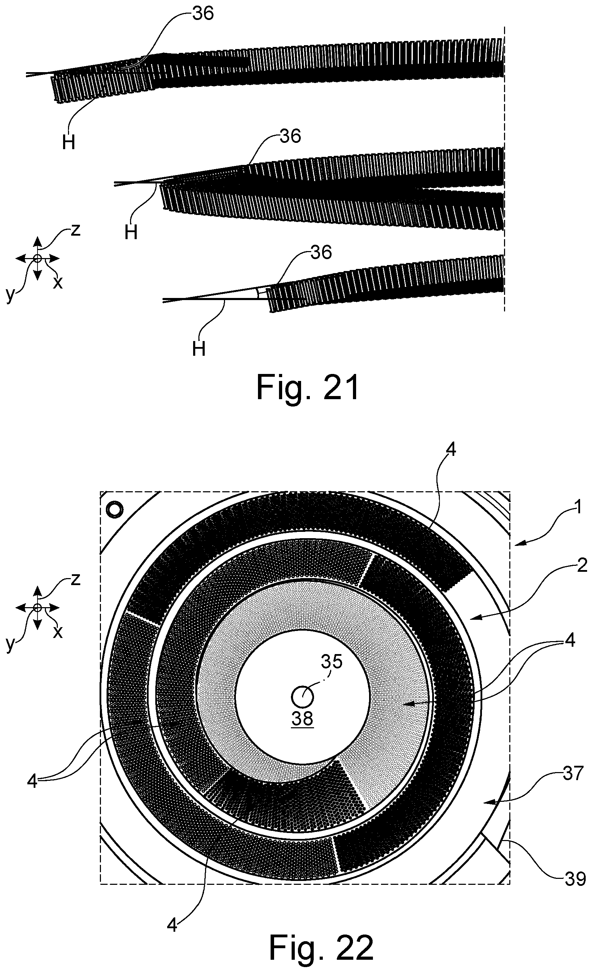

Gemäß den Figuren 20 bis 24 kann der Förderteppich 4 auch so konfiguriert sein, dass sich die Grundplatte 5 mit ihrer Längsrichtung X spiralförmig und schraubenförmig um eine parallel zur Höhenrichtung Z verlaufende Zentralachse 35 über mindestens 30° erstreckt. In den Figuren 20 und 22 steht diese Zentralachse 35 senkrecht auf der Zeichnungsebene.

Im Beispiel der Figur 20 erstreckt sich der Förderteppich 4 spiralförmig und schraubenförmig über mehr als 720° um die Zentralachse 35. Im Beispiel der Figur 22 ist der Förderteppich 4 segmentiert, so dass er aus mehreren separaten Förderteppichen 4 zusammengefügt ist, die sich jeweils schraubenförmig und spiralförmig erstrecken. Diese Unterteilung oder Segmentierung des Förderteppichs 4 in mehrere separate Förderteppich4 kann fertigungstechnische Vorteile mit sich bringen. Beispielsweise kann die absolute Größe des jeweiligen Förderteppichs 4 durch die jeweilige 3D-Druck-Einrichtung begrenzt sein, die zum Drucken der Grundplatte 5 und/oder der Borsten 6 verwendet wird.

In Figur 21 ist außerdem erkennbar, dass der Förderteppich 4 optional so konfiguriert werden kann, dass sich die Grundplatte 5 mit ihrer Längsrichtung X entlang einer Kurve von mindestens 30° erstreckt, wobei die Grundplatte 5 quer zur Längsrichtung X gegenüber der Horizontalrichtung H so geneigt ist, dass die Grundplatte 5 in der Querrichtung Y zur Kurvenaußenseite hin abfällt. In Figur 21 ist an drei Stellen des Förderteppichs 4, der hier ohne die Grundplatte 5 gezeigt ist, eine Neigung 36 gegenüber der Horizontalrichtung H eingetragen. Erkennbar ist der Förderteppich 4 so geneigt, dass seine Oberseite zur Kurvenaußenseite abfällt, in Figur 21 nach links.

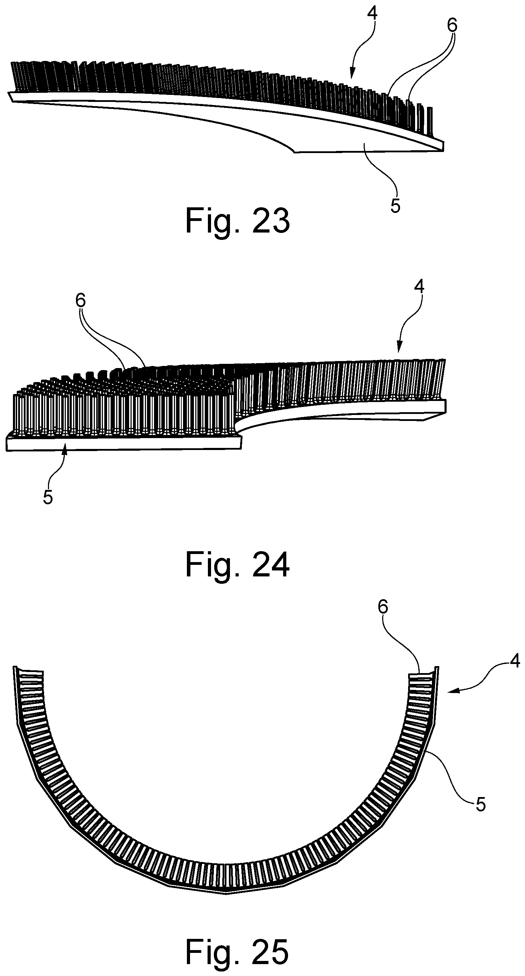

Die Figuren 23 und 24 zeigen Beispiele für räumlich gekrümmte Förderteppiche 4, bei denen bereits die Grundplatte 5 räumlich gekrümmt hergestellt ist. Hierdurch wird eine Anpassung bzw. Konfektionierung des Förderteppichs 4 an eine räumlich gekrümmte Förderstrecke 2 vereinfacht.

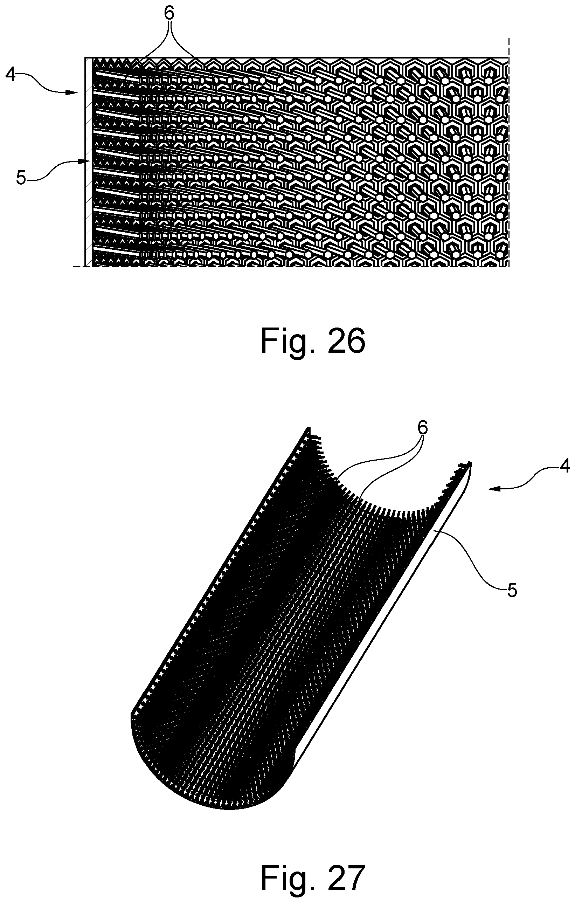

Die Figuren 25 bis 27 zeigen exemplarisch einen Förderteppich 4, der für eine als Halbrohr oder Halfpipe konfigurierte Förderstrecke 2 konfektioniert ist. In einer solchen Förderstrecke 2 können längliche Werkstücke bzw. Stückgüter, die auf ihrer Stirnseite stehen können, gekippt und bezüglich ihrer Längsrichtung ausgerichtet werden. Der gedruckte Förderteppich 4 lässt sich einfach an solche komplexen Geometrien anpassen. Das Belegen einer solchen Förderstrecke 2 mit einem Förderteppich 4 wird dadurch vereinfacht.

Die Figuren 20 und 22 eigen dabei zumindest einen Ausschnitt einer Vibrationsfördereinrichtung 1, die als Fördertopf 37 ausgestaltet ist, der sich durch eine spiralförmige und schraubenförmige Förderstrecke 2 auszeichnet, die Werkstücke bzw. Stückgüter zentralen Einlass 38 bis zu einem randseitigen Auslass 39 fördert. Bezogen auf die Zentralachse 35 befindet sich der Einlass 38 radial innen und unten, während sich der Auslass 39 radial außen und oben befindet.

## Patentansprüche

1. Förderteppich (4) für eine Vibrationsfördereinrichtung (1),
- mit einer Grundplatte (5), die eine Längsrichtung (X), eine Querrichtung (Y) und eine Höhenrichtung (Z) definiert,
- mit einer Vielzahl von Borsten (6), die in der Höhenrichtung (Z) von der Grundplatte (5) abstehen,
- wobei die Borsten (6) mittels 3D-Druck auf die Grundplatte (5) aufgedruckt sind.

2. Förderteppich (4) nach Anspruch 1,
**dadurch gekennzeichnet,**
- **dass** die Grundplatte (5) mittels 3D-Druck hergestellt ist.

3. Förderteppich (4) nach Anspruch 1 oder 2,
**dadurch gekennzeichnet,**
- **dass** die Grundplatte (5) und die Borsten (6) aus unterschiedlichen Materialien, vorzugsweise aus unterschiedlichen Kunststoffen, hergestellt sind.

4. Förderteppich (4) nach einem der vorhergehenden Ansprüche,
**dadurch gekennzeichnet,**
- **dass** die Borsten (6) jeweils einen mit der Grundplatte (5) verbundenen Fußbereich (7), ein von der Grundplatte (5) entferntes Borstenende (8) und einen Federbereich (9) aufweisen, der den Fußbereich (7) mit dem Borstenende (8) verbindet,
- **dass** die jeweilige Borste (6) quer zur Borstenlängsrichtung (10) einen Borstenquerschnitt (11) aufweist, der im Fußbereich (7) größer ist als im Federbereich (9).

5. Förderteppich (4) nach einem der vorhergehenden Ansprüche,
**dadurch gekennzeichnet,**
- **dass** die Borsten (6) jeweils einen mit der Grundplatte (5) verbundenen Fußbereich (7), ein von der Grundplatte (5) entferntes Borstenende (8) und einen Federbereich (9) aufweisen, der den Fußbereich (7) mit dem Borstenende (8) verbindet,
- wobei das Borstenende (8) eben ist und parallel zu einer Förderebene (12) verläuft, die sich parallel zur Längsrichtung (X) und parallel zur Querrichtung (Y) erstreckt, und/oder wobei der Federbereich (9) gerade ausgestaltet ist und gegenüber der Höhenrichtung (Z) um einen Neigungswinkel (13) von mindestens 10° und höchstens 45° geneigt ist.

6. Förderteppich (4) nach Anspruch 5,
**dadurch gekennzeichnet,**
- **dass** auf der Grundplatte (5) ein erster Teppichabschnitt (15) ausgebildet ist, in dem die Borsten (6) parallel zueinander verlaufen und der Neigungswinkel (13) der Borsten (6) bezüglich der Längsrichtung (X) so orientiert ist, dass die Borsten (6) eine erste gerade Förderrichtung (16) entlang des Förderteppichs (4) definieren,
- **dass** auf der Grundplatte (5) ein, insbesondere in der Längsrichtung (X) an den ersten Teppichabschnitt (15) anschließender, zweiter Teppichabschnitt (17) ausgebildet ist, in dem die Borsten (6) parallel zueinander verlaufen und der Neigungswinkel (13) der Borsten (6) bezüglich der Längsrichtung (X) so orientiert ist, dass die Borsten (6) eine zweite gerade Förderrichtung (18) entlang des Förderteppichs (4) definieren,
- **dass** die zweite Förderrichtung (18) um eine parallel zur Höhenrichtung (Z) verlaufende Drehachse (19) zur ersten Förderrichtung (16) gedreht ist.

7. Förderteppich (4) nach Anspruch 5 oder 6,
**dadurch gekennzeichnet,**
- **dass** auf der Grundplatte (5) ein Teppichabschnitt (20) ausgebildet ist, in dem die Orientierung der Neigungswinkel (13) der Borsten (6) bezüglich der Längsrichtung (X) entlang des Förderteppichs (4) so variiert, dass die Borsten (6) eine gekrümmte Förderrichtung (21) entlang des Förderteppichs (4) definieren.

8. Förderteppich (4) nach einem der vorhergehenden Ansprüche,
**dadurch gekennzeichnet,**
- **dass** die Borsten (6) in der Längsrichtung (X) einen konstanten Längsabstand (23) und in der Querrichtung (Y) einen konstanten Querabstand (24) voneinander aufweisen,
- **dass** der Querabstand (24) kleiner ist als der Längsabstand (23).

9. Förderteppich (4) nach einem der vorhergehenden Ansprüche,
**dadurch gekennzeichnet,**
- **dass** Borsten (6), die in der Längsrichtung (X) benachbart sind, in der Querrichtung (Y) zueinander versetzt sind, vorzugsweise um die Hälfte der Summe aus Querabstand (24) und Borstenbreite (29).

10. Förderteppich (4) nach einem der vorhergehenden Ansprüche,
**dadurch gekennzeichnet,**
- **dass** der Förderteppich (4) zumindest eine Begrenzungswand (25) aufweist, die in der Höhenrichtung (Z) von der Grundplatte (5) absteht, die sich entlang einer Förderrichtung (26) eines die Borsten (6) aufweisenden Teppichabschnitts (27) des Förderteppichs (4) erstreckt und die quer zur Förderrichtung (26) an den Teppichabschnitt (27) anschließt,
- **dass** die Begrenzungswand (25) mittels 3D-Druck auf die Grundplatte (5) aufgedruckt ist.

11. Förderteppich (4) nach einem der vorhergehenden Ansprüche,
**dadurch gekennzeichnet,**
- **dass** auf derselben Grundplatte (5) zumindest ein erster Teppichabschnitt (15) und ein zweiter Teppichabschnitt (17) ausgebildet sind,
- **dass** die Borsten (6) innerhalb des ersten Teppichabschnitts (15) hinsichtlich einer in der Höhenrichtung (Z) gemessenen Borstenhöhe (32) und eines quer zur Borstenlängsrichtung (10) verlaufenden Borstenquerschnitts (11) innerhalb eines Federbereichs (9) der jeweiligen Borste (6) und eines in der Längsrichtung (X) gemessenen Längsabstands (23) zu benachbarten Borsten (6) und eines in der Querrichtung (Y) gemessenen Querabstands (24) zu benachbarten Borsten (6) und eines Neigungswinkels (13) gegenüber der Horizontalrichtung (Z) identisch sind,
- **dass** die Borsten (6) innerhalb des zweiten Teppichabschnitts (17) hinsichtlich der Borstenhöhe (32) und des Borstenquerschnitts (11) und des Längsabstands (23) und des Querabstands (24) und des Neigungswinkels (13) identisch sind,
- **dass** sich die Borsten des ersten Teppichabschnitts (15) und die Borsten (6) des zweiten Teppichabschnitts (17) hinsichtlich der Borstenhöhe (32) und/oder des Borstenquerschnitts (11) und/oder des Längsabstands (23) und/oder des Querabstands (24) und/oder des Neigungswinkels (13) voneinander unterscheiden.

12. Förderteppich (4) nach einem der vorhergehenden Ansprüche,
**dadurch gekennzeichnet,**
- **dass** auf der Grundplatte (5) ein Teppichabschnitt ausgebildet ist, bei dem die Borsten (6) entlang der Längsrichtung (X) hinsichtlich einer in der Höhenrichtung (Z) gemessenen Borstenhöhe (32) und/oder eines quer zur Borstenlängsrichtung (10) verlaufenden Borstenquerschnitts (11) innerhalb eines Federbereichs (9) der jeweiligen Borste (6) und/oder eines in der Längsrichtung (X) gemessenen Längsabstands (23) zu benachbarten Borsten (6) und/oder eines in der Querrichtung (Y) gemessenen Querabstands (24) zu benachbarten Borsten (6) und/oder eines Neigungswinkels (13) gegenüber der Horizontalrichtung (Z) variieren,
- wobei insbesondere vorgesehen sein kann, dass die Borstenhöhe (32) und/oder der Borstenquerschnitt (11) und/oder der Längsabstand (23) und/oder der Querabstand (24) und/oder der Neigungswinkel (13) in der Längsrichtung (X) gestuft (also immer mit mehreren diesbezüglich identischen Borsten) oder stufenlos (also von Borste zu Borste) zunimmt oder abnimmt.

13. Förderteppich (4) nach einem der vorhergehenden Ansprüche,
**dadurch gekennzeichnet,**
- **dass** sich die Grundplatte (5) mit ihrer Längsrichtung (X) spiralförmig und schraubenförmig um eine parallel zur Höhenrichtung (Z) verlaufende Zentralachse über mindestens 30° oder über mindestens 360° oder über mindestens 720° erstreckt.

14. Förderteppich (4) nach einem der vorhergehenden Ansprüche,
**dadurch gekennzeichnet,**
- **dass** sich die Grundplatte (5) mit ihrer Längsrichtung (X) entlang einer Kurve von mindestens 30° erstreckt,
- **dass** die Grundplatte (5) quer zur Längsrichtung (X) gegenüber der Horizontalrichtung so geneigt ist, dass die Grundplatte (5) in der Querrichtung (Y) zur Kurvenaußenseite hin abfällt.

15. Vibrationsfördereinrichtung (1) zum Fördern von Stückgütern oder Werkstücken, mit einer Förderstrecke (2), mit einer Vibrationseinrichtung (3), welche die Förderstrecke (2) zu Vibrationen anregt, und mit wenigstens einem auf der Förderstrecke (2) angeordneten Förderteppich (4) nach einem der vorhergehenden Ansprüche.
